Europäisches Patentamt

(19) European Patent Office

Office européen des brevets

(11) Veröffentlichungsnummer: **0 183 644**
**B1**

(12) **EUROPÄISCHE PATENTSCHRIFT**

(45) Veröffentlichungstag der Patentschrifft:
07.02.90

(21) Anmeldenummer: 85810501.8

(22) Anmeldetag: 01.11.85

(51) Int. Cl. ⁵: **B 28 D 1/14, B 23 Q 11/00**

(54) **Verfahren zum Herstellen von Ausnehmungen.**

(30) Priorität: 29.11.84 DE 3443591

(43) Veröffentlichungstag der Anmeldung:
04.06.86 Patentblatt 86/23

(45) Bekanntmachung des Hinweises auf die Patenterteilung:
07.02.90 Patentblatt 90/06

(84) Bennante Vertragsstaaten:
CH DE FR GB IT LI NL SE

(56) Entgegenhaltungen:
DE-A-3 207 747
GB-A-679 789
US-A-3 340 433
US-A-3 386 004
US-A-4 089 031

(73) Patentinhaber: HILTI Aktiengesellschaft
FL-9494 Schaan (LI)

(72) Erfinder: Millauer, Wolfgang
Dietrich Stein-Strasse 5
D-8000 München 60 (DE)
Erfinder: Raab, Dieter
Boschetsriederstrasse 121B
D-8000 München 70 (DE)

(74) Vertreter: Wildl, Roland
Hilti Aktiengesellschaft Patentabteilung
FL-9494 Schaan (LI)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

EP 0 183 644 B1

## Beschreibung

Die Erfindung betrifft ein Verfahren zum Herstellen von Ausnehmungen in zementgebundenen, Eisenarmierungen aufweisenden Baumaterialien, wie Beton und dergleichen, mittels in Handgeräte eingesetzter Bohr- oder Meisselwerkzeuge.

Zum Herstellen von Ausnehmungen, wie Bohrungen, Nuten oder dergleichen, werden heute neben sogenannten Mauerfräsen vor allem Bohr- oder Meisselhämmer verwendet. Diese Geräte arbeiten meist nach dem elektropneumatischen System und weisen gegenüber den früher üblichen Schlagbohrmaschinen eine wesentlich höhere Abbauleistung auf.

Ein bisher ungelöstes Problem bei der Herstellung solcher Ausnehmungen mittels dieser Geräte entsteht beim Auftreffen der Werkzeuge auf die von aussen meistens nicht ersichtlichen Armierungseisen. Durch die Schlagenergie werden die Werkzeuge beim Auftreffen auf Armierungseisen sehr schnell beschädigt und können nach kurzer Zeit unbrauchbar werden.

Bekannt sind zwar Eisensuchgeräte, mit denen im Baumaterial enthaltene Armierungseisen aufgespürt werden sollen. Diese Geräte sind jedoch sehr ungenau und praktisch nur zum Aufspüren von unmittelbar unter der Oberfläche liegenden Armierungseisen geeignet. Ausserdem sind sie sehr störungsempfindlich und somit für den rauhen Einsatz auf der Baustelle praktisch nicht geeignet.

Weitere aufwendigere Möglichkeiten, wie Röntgentechnik, Ultraschallverfahren oder dergleichen, kommen ans praktischen und wirtschaftlichen Gründen kaum in Frage.

Der Erfindung liegt die Aufgabe zugrunde, ein Verfahren zum Herstellen von Ausnehmungen in Eisenarmierungen aufweisenden Baumaterialien zu schaffen, bei dem Beschädigungen oder Zerstörungen der Werkzeuge verhindert werden.

Gemäss der Erfindung wird dies dadurch erreicht, dass eine Elektrode aus einem Nichteisenmetall in elektrisch leitenden Kontakt mit dem Baumaterial gebracht, die zwischen der Elektrode und dem Werkzeug durch Bildung eines galvanischen Elementes entstehende Spannung gemessen und die bei Berührung das Werkzeuges mit den Armierungseisen erfolgende Spannungsänderung als Signal für geräteseitige Steuerfunktionen verwendet wird.

Im Gegensatz zu den bekannten Verfahren werden also die Armierungseisen nicht vor Beginn des Bearbeitungsvorganges aufgespürt, sondern erst eine tatsächlich erfolgte Berührung des Werkzeuges mit einem der Armierungseisen festgestellt. Dadurch kann der erhebliche Zeitaufwand für das ohnehin relativ ungenaue Aufspüren von Armierungseisen eingespart werden.

Das gemäss Erfindung vorgeschlagene Verfahren beruht auf dem Prinzip, dass zwei über einen Elektrolyt miteinander in Verbindung stehende Metalle unterschiedlichen Potentials ein galvanisches Element bilden und eine dem Potentialunterschied der verwendeten Metalle entsprechende Spannung abgeben. Das Baumaterial übernimmt dabei die Rolle des Elektrolyts. Da sich die Armierungseisen jedoch meist im Innern des Baumaterials befinden, ist diese Spannung von aussen nicht feststellbar. Beim Auftreffen des Werkzeuges auf eines der Armierungseisen wird das Werkzeug elektrisch gesehen zur Mess-Sonde, über die das Potential der Armierungseisen gegenüber demjenigen der auf das Baumaterial aufgebrachten Elektrode aus einem Nichteisenmetall gemessen werden kann.

Da das durch die Elektrode und die Armierungseisen gebildete, galvanische Element eine zum Teil allerdings geringe Spannung abgibt, ist rein messtechnisch gesehen für das Verfahren keine Fremdenergie notwendig.

Das bei Berührung des Werkzeuges mit dem Armierungseisen entstehende Signal kann gegebenenfalls unter entsprechender Verstärkung direkt für Schaltvorgänge, wie Trennen des Gerätes vom Versorgungsnetz, Betätigen von Kupplungen oder Bremsen, verwendet werden. Das Signal kann aber auch optisch, durch entsprechende Lampen bzw Leuchtdioden, oder akustisch für die Bedienungsperson feststellbar gemacht werden. In diesem Fall ist es der Bedienungsperson überlassen, entsprechende Massnahmen zu treffen.

Wie bereits erwähnt, ist für die Grösse der Spannung der Potentialunterschied zwischen dem Material der Elektrode und den Armierungseisen massgebend. Da aus Gründen der Festigkeit und der chemischen Beständigkeit an das Material der Elektrode gewisse Mindestanforderungen gestellt werden müssen, ist es zweckmässig, wenn die Elektrode aus Aluminium besteht. Der zwischen Eisen und Aluminium bestehende Potentialunterschied beträgt etwa 1,2 Volt. Eine solche Spannungsänderung kann auch durch weniger empfindliche Instrumente erfasst und direkt für Steuerfunktionen verwendet werden.

Eine weitere vorteilhafte Möglichkeit besteht darin, dass die Elektrode aus Zink besteht. In diesem Fall beträgt der Potentialunterschied zu Eisen mit Beton als Elektrolyt etwa 1 Volt. An sich ist jedoch auch die Verwendung von anderen Metallen möglich. Beim erfindungsgemässen Verfahren bildet das Werkzeug die Mess-Sonde des Systems. Da das Werkzeug während des Bohrvorganges ebenfalls mit dem Baumaterial in Berührung steht, ist es möglich, dass auch zwischen dem Werkzeug und der Elektrode ein galvanisches Element gebildet wird und beim Auftreffen des Werkzeuges auf ein Armierungseisen keine wesentliche Spannungsänderung eintritt. Um dies zu vermeiden, ist es zweckmässig, das Werkzeug zu beschichten. Diese Beschichtung kann entweder aus Isoliermaterial, wie Kunststoff oder dergleichen, bestehen. Als weitere Möglichkeit kann das Werkzeug jedoch auch mit demselben Material wie die Elektrode beschichtet werden. Bei Verwendung einer aus Zink bestehenden Elektrode ist das Aufbringen einer Zinkschicht auf das Werkzeug beispielsweise auf galvanischem Wege oder durch sogenannte Feuerverzinkung möglich. Bei Vervendung einer Elektrode aus Aluminium kann eine Aluminiumschicht nach dem Plasmaspritzverfahren auf das Werkzeug aufgebracht werden.

Anstelle einer Beschichtung des Werkzeuges kann auch das ganze Werkzeug aus einem Nichteisenmetall hergestellt werden. Hier bestehen aus praktischen Gründen allerdings gewisse Grenzen, da die üblicherweise verwendeten Hartmetalleinsätze an den Schneiden des Werkzeuges beispielsweise nicht mehr durch Löten mit dem Schaft des Werkzeuges verbunden werden können.

In der Praxis hat sich allerdings gezeigt, dass ein sich in Beton drehendes bzw bewegendes Werkzeug aus Stahl durch die Bewegung eine Halbelementspannung annimmt, die derjenigen von ruhendem Aluminium oder Zink nahekommt. Somit ist beim Bohren die Spannungsdifferenz zwischen einem Bohrer aus Stahl und der Elektrode wesentlich geringer als zwischen den Armierungseisen und der Elektrode. Eine Herstellung bzw. Beschichtung des Werkzeuges aus bzw. mit einem Nichteisenmetall ist somit nützlich aber für die Funktion nicht unbedingt notwendig.

Die Erfindung soll nachstehend anhand der sie beispielsweise wiedergebenden Zeichnung näher erläutert. Diese zeigt ein erfindungsgemässes Verfahren, schematisch dargestellt.

Ein insgesamt mit 1 bezeichnetes Baumaterial weist untereinander elektrisch verbundene Armierungseisen 2 auf. Ein Werkzeug 3 ist im Begriff, im Baumaterial 1 eine Ausnehmung 1a herzustellen. Das Werkzeug 3 ist in einen Werkzeughalter 4 eines nicht näher dargestellten Bohrgerätes eingesetzt. In dem an den Werkzeughalter 4 angrenzenden Bereich des Werkzeuges 3 ist ein mit dem Werkzeug 3 in elektrischer Verbindung stehender Schleifring 5 angeordnet. Eine Elektrode 6 ist mit Hilfe eines Dübels 7 auf der Oberfläche des Baumaterials 1 befestigt. Die Elektrode 6 wird zusammen mit einer Lasche 8 durch eine Mutter 9 gegen das Baumaterial 1 gepresst. Die Elektrode 6 besteht aus einem Nichteisenmetall, beispielsweise aus Aluminium. Zwischen der Elektrode 6 und den Armierungseisen 2 besteht somit ein Potentialunterschied. Die Elektrode 6 und die Armierungseisen 2 bilden zusammen mit dem Baumaterial 1 ein galvanisches Element. Zwischen der Elektrode 6 und den Armierungseisen 2 besteht eine Spannung, welche bei Verwendung von Aluminium für die Elektrode 6 etwa 1,2 Volt beträgt. Das Werkzeug 3 dient in diesem galvanischen Element als Mess-Sonde. Trifft das Werkzeug 3 auf ein Armierungseisen 2, so kann die zwischen der Elektrode 6 und den Armierungseisen 2 bzw. zwischen dem mit dem Werkzeug 3 in elektrischer Verbindung stehenden Schleifring 5 und der Lasche 8 bestehende Spannung abgegriffen, gemessen und die beim Treffen des Werkzeuges 3 auf ein Armierungseisen 2 entstehende Spannungsänderung als Signal für geräteseitige Steuerfunktionen verwendet werden. Um zu verhindern, dass bereits zwischen dem Werkzeug 3 und der Elektrode 6 ein galvanisches Element entsteht, kann die Oberfläche des Werkzeuges 3 beispielsweise mit einem Isoliermaterial oder mit demselben Werkstoff wie die Elektrode 6 beschichtet werden.

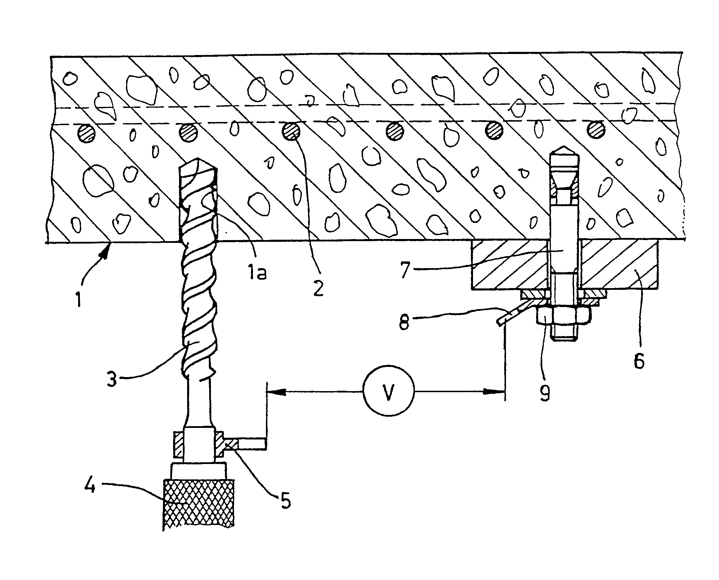

## Patentansprüche

1. Verfahren zum Herstellen von Ausnehmungen in Eisenarmierungen aufweisenden Baumaterialien, wie Beton und dgl., mittels in Handgeräte eingesetzter Bohr- oder Meisselwerkzeuge, *dadurch gekennzeichnet*, dass eine Elektrode (6) aus einem Nichteisenmetall in elektrisch leitenden Kontakt mit dem Baumaterial (1) gebracht, die zwischen der Elektrode (6) und dem Werkzeug (3) durch Bildung eines galvanischen Elementes entstehende Spannung gemessen und die bei Berührung des Werkzeuges (3) mit den Armierungseisen (2) erfolgende Spannungsänderung als Signal für geräteseitige Steuerfunktionen verwendet wird.

2. Verfahren nach Anspruch 1 *dadurch gekennzeichnet*, dass die Elektrode (6) aus Aluminium besteht.

3. Verfahren nach Anspruch 1 *dadurch gekennzeichnet*, dass die Elektrode (6) aus Zink besteht.

4. Verfahren nach einem der Ansprüche 1 bis 3, *dadurch gekennzeichnet*, dass das Werkzeug (3) beschichtet ist.

5. Verfahren nach einem der Ansprüche 1 bis 4, *dadurch gekennzeichnet*, dass das Werkzeug (3) aus einem Nichteisen-Metall besteht.

## Claims

1. A method of producing recesses in building materials which have iron reinforcements, such as concrete and the like, by means of drilling or chiselling tools inserted into hand tools, characterised in that an electrode (6) made of a non-ferrous metal is brought into electrically conductive contact with the building material (1), the voltage arising between the electrode (6) and the tool (3) by formation of a galvanic element is measured and the change in voltage ensuing upon contact of the tool (3) with the iron reinforcements (2) is used as a signal for tool-sided control functions.

2. A method according to claim 1, characterised in that the electrode (6) consists of aluminium.

3. A method according to claim 1, characterised in that the electrode (6) consists of zinc.

4. A method according to any one of claims 1 to 3, characterised in that the tool (3) is coated.

5. A method according to any one of claims 1 to 4, characterised in that the tool (3) consists of a non-ferrous metal.

**Revendications**

1. Procédé pour réaliser des évidements dans des matériaux de construction comprenant des armatures de fer tels que du béton et analogues, au moyen d'outils de perçage ou de burins mis en place dans des appareils à main, *caractérisé en ce* qu'une électrode (6) réalisée en un métal non ferreux est amenée en contact de conduction électrique avec le matériau de construction (1), que l'on mesure la tension établie entre l'électrode (6) et l'outil (3) par la formation d'un couple voltaïque et que la variation de la tension survenant lors de l'entrée en contact de l'outil (3) avec le fer de l'armature (2) est utilisée comme signal pour des fonctions de commande de l'appareil.

2. Procédé selon la revendication 1, *caractérisé en ce* que l'électrode (6) est constituée d'aluminium.

3. Procédé selon la revendication 1, *caractérisé en ce* que l'électrode (6) est constituée de zinc.

4. Procédé selon l'une des revendications 1 à 3, *caractérisé en ce* que l'outil (3) porte un revêtement.

5. Procédé selon l'une des revendications 1 à 4, *caractérisé en ce* que l'outil (3) est constitué d'un métal non ferreux.